# EUROPEAN PATENT APPLICATION

(11) **EP 4 627 936 A1**
(43) Date of publication of application: **08.10.2025**
(21) Application number: 23897824.1
(22) Date of filing: 29.11.2023
(51) Int. Cl.: A23L 33/10, A21D 2/14, A21D 2/24, A23G 1/32, A23G 1/44, A23G 3/34, A23G 3/36, A23G 3/44, A23G 9/32, A23G 9/38, A23L 2/00, A23L 2/02, A23L 2/38, A23L 2/52, A23L 7/10, A23L 23/00, A23L 33/105, A23L 33/18

(54) **FOOD/BEVERAGE COMPOSITION**

(30) Priority: 30.11.2022 JP 2022192392
(71) Applicant: Kao Corporation, Chuo-ku, Tokyo 103-8210 (JP)
(72) Inventor: SHIMODA, Yuichi, Tokyo 131-8501 (JP); TAKESHITA, Masao, Tokyo 131-8501 (JP)
(74) Representative: Hoffmann Eitle
(86) International application number: PCT/JP2023/042726
(87) International publication number: WO 2024/117177

(57) **Abstract**

Provided is a food and beverage composition that has a suppressed astringent taste derived from chlorogenic acids, and allows the original retronasal aroma of a food and beverage to be sensed. The food and beverage composition includes the following components (A) and (B): (A) 0.050 mass% to 20 mass% of chlorogenic acids; and (B) one or more selected from the group consisting of Leu-Pro and cyclo(Leu-Pro). A mass ratio of the component (B) to the component (A), [(B)/(A)], is 0.03×10⁻⁴ or more and 100×10⁻⁴ or less, and the food and beverage composition has a solid content of 2.0 mass% or more.

## Description

### Field of the Invention

The present invention relates to a food and beverage composition.

### Background of the Invention

Chlorogenic acids are a kind of polyphenol, and have been reported to have physiological actions, such as an antioxidative action, a blood pressure-reducing action, and a visceral fat-reducing action (e.g., Patent Documents 1 and 2). Coffee beans are known to be a material containing large amounts of chlorogenic acids, and a coffee beverage containing chlorogenic acids is widely and habitually drunk.

Meanwhile, to respond to various preferences and health concerns of consumers, it is expected that chlorogenic acids can be ingested from a food and beverage excluding a coffee beverage.

[Patent Document 1] JP-A-2002-87977
[Patent Document 2] JP-A-2008-88187

### Summary of the Invention

The present invention provides a food and beverage composition, comprising the following components (A) and (B):
(A) 0.050 mass% to 20 mass% of chlorogenic acids; and
(B) one or more selected from the group consisting of Leu-Pro and cyclo(Leu-Pro),
wherein a mass ratio of the component (B) to the component (A), [(B)/(A)], is 0.030×10⁻⁴ or more and 100×10⁻⁴ or less, and the food and beverage composition has a solid content of 2.0 mass% or more.

### Detailed Description of the Invention

However, the present inventors found that when chlorogenic acids were blended in a food and beverage containing an appropriate solid content, a unique astringent taste derived from chlorogenic acids was generated and the original retronasal aroma of the food and beverage was hardly sensed, and hence the preference of the food and beverage was impaired.

As used herein, the term "astringent taste" refers to astringency that irritates a tongue, and the term "retronasal aroma" refers to an aroma that rises through the throat toward the nose and is sensed when a food and beverage is held in the mouth.

Accordingly, the present invention relates to providing a food and beverage composition that has a suppressed astringent taste derived from chlorogenic acids, and allows the original retronasal aroma of a food and beverage to be sensed.

The present inventors made energetic investigations. As a result, the present inventors found that when a predetermined dipeptide was incorporated at a specific quantitative ratio with respect to chlorogenic acids, surprisingly, despite the food and beverage composition containing chlorogenic acids, the astringent taste derived from chlorogenic acids was successfully suppressed, and the retronasal aroma of the food and beverage was enhanced.

According to the present invention, there can be provided a food and beverage composition that has a suppressed astringent taste derived from chlorogenic acids, and allows the original retronasal aroma of a food and beverage to be sensed.

A food and beverage composition of the present invention contains chlorogenic acids as a component (A). As used herein, the term "chlorogenic acids" is a generic term including: monocaffeoylquinic acids, such as 3-caffeoylquinic acid, 4-caffeoylquinic acid, and 5-caffeoylquinic acid; monoferuloylquinic acids, such as 3-feruloylquinic acid, 4-feruloylquinic acid, and 5-feruloylquinic acid; and dicaffeoylquinic acids, such as, 3,4-dicaffeoylquinic acid, 3,5-dicaffeoylquinic acid, and 4,5-dicaffeoylquinic acid. In the present invention, at least one kind out of the above-mentioned nine kinds has only to be incorporated. The component (A) may be in the form of a salt or a hydrate. While the salt is not particularly limited as long as the salt is physiologically acceptable, the salt may be, for example, an alkali metal salt.

As the component (A), a commercially available reagent may be used, or an extract of a plant rich in the component (A) may be used. When the plant extract is used as the component (A), an extraction method and extraction conditions for the plant extract are not particularly limited, and a known method may be adopted.

While the plant is not particularly limited as long as the plant contains the component (A), examples thereof may include one or more selected from the group consisting of sunflower seeds, an apple unripe fruit, a coffee bean, a simon leaf, a cone of a Pinaceae plant, a seed husk of a Pinaceae plant, sugarcane, a heavenly bamboo leaf, a burdock, the skin of an eggplant, a Japanese apricot fruit, a coltsfoot, and a Vitaceae plant. Of those, coffee beans are preferred from the viewpoint of, for example, the content of chlorogenic acids. The coffee beans are preferably one or more selected from the group consisting of green coffee beans and lightly-roasted coffee beans, more preferably green coffee beans from the viewpoint of enhancing the physiological effect of the component (A). As used herein, the term "lightly-roasted coffee beans" refers to roasted coffee beans each having an L value of 30 or more and 60 or less. The L value of each of the lightly-roasted coffee beans is preferably 32 or more, more preferably 34 or more, more preferably 36 or more, more preferably 38 or more, even more preferably 40 or more from the viewpoint of enhancing the physiological effect of the component (A). The kind and production area of the coffee beans are not particularly limited. In addition, as used herein, the term "L value" refers to a value determined by measuring the lightness of roasted coffee beans with a color difference meter when the L value of black is set to 0 and the L value of white is set to 100.

When roasted coffee beans including those having an L value of less than 30 are used as the coffee beans, the astringent taste derived from chlorogenic acids may be masked with a roasted odor of the roasted coffee beans. Accordingly, the present invention is directed to a food and beverage excluding a beverage prepared by using an extract of roasted coffee beans including roasted coffee beans each having an L value of preferably less than 30, more preferably less than 32, more preferably less than 34, more preferably less than 36, more preferably less than 38, even more preferably less than 40 from the viewpoint of easily achieving the effects of the present invention.

The content of the component (A) in the food and beverage composition of the present invention is from 0.050 mass% to 20 mass%. The content is preferably 0.10 mass% or more, more preferably 0.15 mass% or more, even more preferably 0.20 mass% or more from the viewpoint of enhancing the physiological effect of the component (A). In addition, the content is preferably 18 mass% or less, more preferably 16 mass% or less, even more preferably 14 mass% or less from the viewpoint of suppressing the astringent taste derived from chlorogenic acids. Moreover, the content of the component (A) in the food and beverage composition of the present invention is from 0.050 mass% to 20 mass%, preferably from 0.10 mass% to 18 mass%, more preferably from 0.15 mass% to 16 mass%, even more preferably from 0.20 mass% to 14 mass%. As used herein, the content of the component (A) is defined on the basis of the total amount of the above-mentioned nine kinds of chlorogenic acids. When the component (A) is in the form of a salt or a hydrate, the content of the component (A) is a value in terms of chlorogenic acids that are free acids. The content of the component (A) may be measured by an analysis method suitable for the state of a measurement sample among generally known measurement methods, and for example, may be analyzed by liquid chromatography. A specific example thereof is a method described in Examples to be described later. At the time of the measurement, such treatment as described below may be appropriately performed as required: the sample is lyophilized so that the sample may be adapted to the detection range of an apparatus; or contaminants in the sample are removed so that the sample may be adapted to the resolution of the apparatus.

The food and beverage composition of the present invention contains one or more selected from the group consisting of Leu-Pro and cyclo(Leu-Pro) as a component (B).

Leu-Pro is a dipeptide obtained by dehydration condensation of a carboxy group of leucine and a secondary amino group of proline, and is represented by the following formula (1). 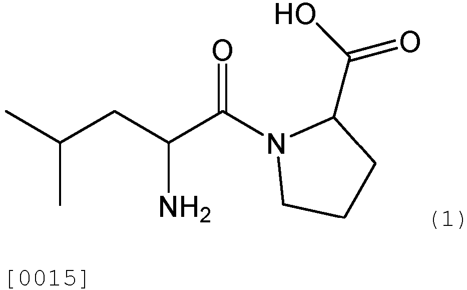 In addition, cyclo(Leu-Pro) is a compound (cyclic dipeptide) having a 2,5-diketopiperazine skeleton obtained by intramolecular cyclization of a dipeptide formed from leucine and proline, and is represented by the following formula (2).

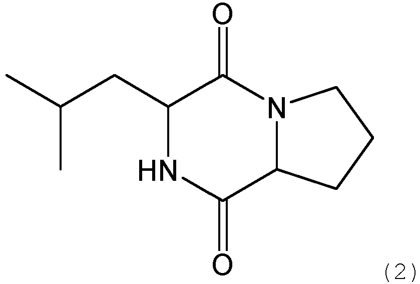

It is assumed that a cyclic dipeptide is produced through dehydration condensation of two amino acid molecules by heat treatment, for example, roasting of green coffee beans (see JP-A-2010-166911 and JP-A-2013-138631). The cyclic dipeptide is known to be a bitter substance in a coffee beverage obtained by using roasted coffee beans as a raw material. In the present invention, it was found that when the component (B) was incorporated into the food and beverage composition so that the mass ratio of the component (B) to the component (A) fell within a specific range, surprisingly, the astringent taste derived from chlorogenic acids was successfully suppressed and the original retronasal aroma of a food and beverage was successfully enhanced.

It is preferred that both amino acid residues of the component (B) be an L-form, but one or both of the amino acid residues may be a D-form. In addition, the amino acid residues may be in the form of a salt.

As the component (B), a commercially available reagent may be used, or an extract of a plant or food rich in the component (B) may be incorporated. The plant may be appropriately selected without departing from the gist of the present invention as long as the plant contains the component (B) and is generally used in the field of foods and beverages. In addition, an extraction method and extraction conditions are not particularly limited, and a known method may be adopted.

The content of the component (B) in the food and beverage composition of the present invention may be appropriately selected as long as the mass ratio [(B)/(A)] may fall within the ranges described later. The content is preferably 0.010×10⁻⁴ mass% or more, more preferably 0.030×10⁻⁴ mass% or more, more preferably 0.050×10⁻⁴ mass% or more, even more preferably 0.10×10⁻⁴ mass% or more from the viewpoint of suppressing the astringent taste derived from chlorogenic acids and from the viewpoint of enhancing the retronasal aroma of the food and beverage. In addition, the content is preferably 600×10⁻⁴ mass% or less, more preferably 540×10⁻⁴ mass% or less, more preferably 200×10⁻⁴ mass% or less, more preferably 60×10⁻⁴ mass% or less, even more preferably 10×10⁻⁴ mass% or less from the viewpoint of suppressing a bitter aftertaste derived from the component (B). Moreover, the content of the component (B) in the food and beverage composition of the present invention is preferably from 0.010×10⁻⁴ mass% to 600×10⁻⁴ mass%, more preferably from 0.010×10⁻⁴ mass% to 540×10⁻⁴ mass%, more preferably from 0.030×10⁻⁴ mass% to 200×10⁻⁴ mass%, more preferably from 0.050×10⁻⁴ mass% to 60×10⁻⁴ mass%, even more preferably from 0.10×10⁻⁴ mass% to 10×10⁻⁴ mass%.

The content of the component (B) may be measured by an analysis method suitable for the state of a measurement sample among generally known measurement methods, and may be measured by, for example, a GC/MS method. A specific example thereof may be a method described in Examples to be described later. At the time of the measurement, such treatment as described below may be appropriately performed as required: the sample is lyophilized so that the sample may be adapted to the detection range of an apparatus; or contaminants in the sample are removed so that the sample may be adapted to the resolution of the apparatus.

In the food and beverage composition of the present invention, the mass ratio of the component (B) to the component (A), [(B)/(A)], is 0.030×10⁻⁴ or more and 100×10⁻⁴ or less. The mass ratio is preferably 0.050×10⁻⁴ or more, more preferably 0.060×10⁻⁴ or more, even more preferably 0.10×10⁻⁴ or more from the viewpoint of suppressing the astringent taste derived from chlorogenic acids and from the viewpoint of enhancing the retronasal aroma of the food and beverage. In addition, the mass ratio is preferably 60×10⁻⁴ or less, more preferably 34×10⁻⁴ or less, even more preferably 30×10⁻⁴ or less from the viewpoint of suppressing the bitter aftertaste derived from the component (B). Moreover, in the present invention, the mass ratio of the component (B) to the component (A), [ (B) / (A) ] , is 0. 030×10⁻⁴ or more and 100×10⁻⁴ or less, preferably from 0.050×10⁻⁴ to 60x10⁻⁴, more preferably from 0.060×10⁻⁴ to 60×10⁻⁴, more preferably from 0.10×10⁻⁴ to 34×10⁻⁴, even more preferably from 0.10×10⁻⁴ to 30×10⁻4

The food and beverage composition of the present invention may further contain a food ingredient. The food ingredient is not particularly limited, and may be appropriately selected in accordance with the kind of the food and beverage composition. Examples thereof may include fishes and shellfishes (e.g., fish, crab, and shrimp), meats (e.g., beef, pork, and chicken), beans (e.g., soybeans), dairy products (e.g., milk, fresh cream, skimmed milk powder, and cheese), seaweeds (e.g., wakame), nuts and seeds (e.g., almond and cacao), cereal grains (e.g., wheat, rice, and corn), vegetables (e.g., tomato), fruits, tuberous and corm vegetables, mushrooms, eggs, saccharides (e.g., monosaccharides (e.g., glucose and fructose), disaccharides (e.g., sucrose, maltose, and trehalose), oligosaccharides (e.g., an oligosaccharide and raffinose), polysaccharides (e.g., starch and dextrin), isoglucose, processed starch, sugar alcohols (e.g., maltitol, hydrogenated maltose starch syrup, erythritol, xylitol, and sorbitol), honey, maple sugar, and a starch hydrolysate), fats or oils (e.g., a vegetable fat or oil, an animal oil an fat, and a flavoring oil), extracts (e.g., a vegetable extract and a yeast extract), seasonings (e.g., soy sauce, soup stock, miso, malted rice, and salt), proteins (e.g., various peptides and a protein hydrolysate), bird's nest, shark's fin, and soft-shelled turtle. Those food ingredients may be used alone or in combination thereof.

In addition to the above-mentioned components, the food and beverage composition of the present invention may appropriately contain additives, such as a perfume, an emulsifier, an antioxidant, an acidulant, a colorant, a thickener, a stabilizer, a gelling agent, a thickening agent, a preservative, a nutrient enhancer, a bitter, a color coupler, a whitener, an antifungal agent, a blowing agent, a brightener, a pH adjustor, and other food additives, as long as the effects of the present invention are not impaired. The content of the additive may be appropriately set within the range that does not impair the purpose of the present invention.

The food and beverage composition of the present invention has a solid content of 2.0 mass% or more. From the viewpoint of easily achieving the effects of the present invention, the solid content in the food and beverage composition is preferably 5.0 mass% or more, more preferably 10 mass% or more, even more preferably 15 mass% or more. In addition, the upper limit thereof is preferably 100 mass% or less, more preferably 99 mass% or less, even more preferably 98 mass% or less. Moreover, the solid content in the food and beverage composition of the present invention is preferably from 2.0 mass% to 100 mass%, more preferably from 5.0 mass% to 99 mass%, more preferably from 10 mass% to 99 mass%, even more preferably from 15 mass% to 98 mass%. The term "solid content" as used herein refers to the mass of a residue obtained by drying a 3.00 g of the food and beverage composition in an electric thermostatic dryer at 105°C for 3 hours to remove a volatile substance.

The food and beverage composition of the present invention may be in any one of a liquid form, a semisolid form, or a solid form at normal temperature (20°C±15°C), and an appropriate form may be adopted.

The food and beverage composition is not particularly limited as long as the composition can be ingested as it is. Examples thereof may include: breads such as pullman loaf; cakes such as sponge cake; noodles, such as soba, udon, and ramen; rice dishes, such as cooked rice, Chinese fried rice, and pilaf; confectionery, such as candy, gum, chocolate, and baked confectionery; ice creams, such as ice cream and lact ice; beverages, such as a fruit juice beverage, a vegetable beverage, a cocoa beverage, amazake, and an alcohol beverage; soups, such as miso soup and corn soup; dairy products such as yogurt; flaked seasonings; seasonings; syrup for things soaked in syrup and things stewed in syrup; and supplements in a powder form, a granule form, a tablet form, a liquid form, and a gel form.

The food and beverage composition of the present invention may be produced in accordance with an ordinary method, and an appropriate method may be adopted. For example, the food and beverage composition may be produced by blending the component (A) and the component (B), and as required, any other component, and adjusting the mass ratio of the component (B) to the component (A) , [(B)/(A)]. The mixing order of the component (A) and the component (B) is not particularly limited, and one of the component (A) and the component (B) may be added to the other or both the components may be added simultaneously. As a mixing method, an appropriate method, such as stirring or shaking, may be adopted, and a mixing apparatus may be used. When the food and beverage composition of the present invention is a concentrate, for example, a known concentration method, such as a normal-pressure concentration method in which a solvent is evaporated at normal pressure, a reduced-pressure concentration method in which a solvent is evaporated at reduced pressure, or a membrane concentration method in which a solvent is removed by membrane separation, may be adopted. In the case of the solid form, to obtain a desired form, the food and beverage composition may be compression-molded or may be subjected to a known granulation method to provide a granulated product.

### [Method of improving Taste and Flavor of Food and Beverage Composition]

A method of improving a taste and flavor of a food and beverage composition having a solid content of 2.0 mass% or more of the present invention contains allowing (A) 0.050 mass% to 20 mass% of chlorogenic acids, and (B) one or more selected from the group consisting of Leu-Pro and cyclo(Leu-Pro) to coexist in the food and beverage composition at such a ratio that a mass ratio of the component (B) to the component (A), [(B)/(A)], is 0.030×10⁻⁴ or more and 100×10⁻⁴ or less. Herein, the improvement of a taste and flavor preferably refers to the suppression of the astringent taste derived from chlorogenic acids in the food and beverage composition, and the impartment of the original retronasal aroma of the food and beverage. In the method of improving a taste and flavor of a food and beverage composition of the present invention, (A) chlorogenic acids, and (B) one or more selected from the group consisting of Leu-Pro and cyclo (Leu-Pro) have only to finally coexist in the food and beverage composition, and the timing of coexistence and the blending order are not particularly limited.

The specific configurations, contents, and the like of (A) chlorogenic acids, and (B) Leu-Pro and cyclo(Leu-Pro) are the same as those described for the above-mentioned food and beverage composition.

From the viewpoints of suppressing the astringent taste derived from chlorogenic acids and enhancing the retronasal aroma of the food and beverage, the food and beverage composition of the present invention is preferably a food and beverage composition containing the following components (A) and (B):
(A) 0.050 mass% to 16 mass% of chlorogenic acids; and
(B) one or more selected from the group consisting of Leu-Pro and cyclo(Leu-Pro),
wherein a mass ratio of the component (B) to the component (A), [(B)/(A)], is from 0.030×10⁻⁴ to 60×10⁻⁴, and the food and beverage composition has a solid content of 2.0 mass% or more.

From the viewpoints of suppressing the astringent taste derived from chlorogenic acids, enhancing the retronasal aroma of the food and beverage, and suppressing the bitter aftertaste, the food and beverage composition of the present invention is preferably a food and beverage composition containing the following components (A) and (B):
(A) 0.050 mass% to 16 mass% of chlorogenic acids; and
(B) 0.010×10⁻⁴ mass% to 540×10⁻⁴ mass% of one or more selected from the group consisting of Leu-Pro and cyclo(Leu-Pro),
wherein a mass ratio of the component (B) to the component (A), [(B)/(A)], is from 0.03×10⁻⁴ to 60×10⁻⁴, and the food and beverage composition has a solid content of 2.0 mass% or more.

From the viewpoints of suppressing the astringent taste derived from chlorogenic acids, enhancing the retronasal aroma of the food and beverage, and suppressing the bitter aftertaste, the food and beverage composition of the present invention is preferably a food and beverage composition containing the following components (A) and (B):
(A) 0.10 mass% to 14 mass% of chlorogenic acids; and
(B) one or more selected from the group consisting of Leu-Pro and cyclo(Leu-Pro),
wherein a mass ratio of the component (B) to the component (A), [(B)/(A)], is from 0.10×10⁻⁴ to 30×10⁻⁴, and the food and beverage composition has a solid content of 2.0 mass% or more.

From the viewpoints of suppressing the astringent taste derived from chlorogenic acids, and enhancing the retronasal aroma of the food and beverage, the method of improving a taste and flavor of a food and beverage composition of the present invention is preferably a method of improving a taste and flavor of a food and beverage composition having a solid content of 2.0 mass% or more, the method containing allowing (A) 0.050 mass% to 16 mass% of chlorogenic acids, and (B) one or more selected from the group consisting of Leu-Pro and cyclo(Leu-Pro) to coexist at such a ratio that a mass ratio of the component (B) to the component (A), [(B)/(A)], is from 0.030×10⁻⁴ to 60×10⁻⁴.

From the viewpoints of suppressing the astringent taste derived from chlorogenic acids, enhancing the retronasal aroma of the food and beverage, and suppressing the bitter aftertaste, the method of improving a taste and flavor of a food and beverage composition of the present invention is preferably a method of improving a taste and flavor of a food and beverage composition having a solid content of 2.0 mass% or more, the method containing allowing (A) 0.050 mass% to 16 mass% of chlorogenic acids, and (B) 0.010×10⁻⁴ mass% to 540×10⁻⁴ mass% of one or more selected from the group consisting of Leu-Pro and cyclo(Leu-Pro) to coexist at such a ratio that a mass ratio of the component (B) to the component (A), [(B)/(A)], is from 0.030×10⁻⁴ to 60×10⁻⁴.

From the viewpoints of suppressing the astringent taste derived from chlorogenic acids, enhancing the retronasal aroma of the food and beverage, and suppressing the bitter aftertaste, the method of improving a taste and flavor of a food and beverage composition of the present invention is preferably a method of improving a taste and flavor of a food and beverage composition having a solid content of 2.0 mass% or more, the method containing allowing (A) 0.10 mass% to 14 mass% of chlorogenic acids, and (B) one or more selected from the group consisting of Leu-Pro and cyclo(Leu-Pro) to coexist at such a ratio that a mass ratio of the component (B) to the component (A), [(B)/(A)], is from 0.10×10⁻⁴ to 30×10⁻⁴.

In relation to the above-mentioned embodiments, the present invention further discloses the following aspects.
<1> A food and beverage composition, comprising the following components (A) and (B):
   (A) 0.050 mass% to 20 mass% of chlorogenic acids; and
   (B) one or more selected from the group consisting of Leu-Pro and cyclo(Leu-Pro),
   wherein a mass ratio of the component (B) to the component (A), [(B)/(A)], is 0.030×10⁻⁴ or more and 100×10⁻⁴ or less, and the food and beverage composition has a solid content of 2.0 mass% or more.
<2> A method of improving a taste and flavor of a food and beverage composition having a solid content of 2.0 mass% or more, the method comprising allowing (A) 0.050 mass% to 20 mass% of chlorogenic acids, and (B) one or more selected from the group consisting of Leu-Pro and cyclo(Leu-Pro) to coexist at such a ratio that a mass ratio of the component (B) to the component (A), [(B)/(A)], is 0.030×10⁻⁴ or more and 100×10⁻⁴ or less.
<3> In <1> or <2>, a content of the component (A) is preferably 0.10 mass% or more, more preferably 0.15 mass% or more, even more preferably 0.20 mass% or more, is preferably 18 mass% or less, more preferably 16 mass% or less, even more preferably 14 mass% or less, and is from 0.050 mass% to 20 mass%, preferably from 0.10 mass% to 18 mass%, more preferably from 0.15 mass% to 16 mass%, even more preferably from 0.20 mass% to 14 mass%.
<4> In any one of <1> to <3>, a content of the component (B) is preferably 0.010×10⁻⁴ mass% or more, more preferably 0.030×10⁻⁴ mass% or more, more preferably 0.050×10⁻⁴ mass% or more, even more preferably 0.10×10⁻⁴ mass% or more, is preferably 600×10⁻⁴ mass% or less, more preferably 540×10⁻⁴ mass% or less, more preferably 200×10⁻⁴ mass% or less, more preferably 60×10⁻⁴ mass% or less, even more preferably 10×10⁻⁴ mass% or less, and is preferably from 0.010×10⁻⁴ mass% to 600×10⁻⁴ mass%, more preferably from 0.010×10⁻⁴ mass% to 540×10⁻⁴ mass%, more preferably from 0.030×10⁻⁴ mass% to 200×10⁻⁴ mass%, more preferably from 0.050×10⁻⁴ mass% to 60×10⁻⁴ mass%, even more preferably from 0.10×10⁻⁴ mass% to 10×10⁻⁴ mass%.
<5> In any one of <1> to <4>, the mass ratio [(B)/(A)] of the component (B) to the component (A) is preferably 0.050×10⁻⁴ or more, more preferably 0.060×10⁻⁴ or more, even more preferably 0.10×10⁻⁴ or more, is preferably 60×10⁻⁴ or less, more preferably 34×10⁻⁴ or less, even more preferably 30×10⁻⁴ or less, and is 0.030×10⁻⁴ or more and 100×10⁻⁴ or less, preferably from 0.050×10⁻⁴ to 60×10⁻⁴, more preferably from 0.060×10⁻⁴ to 60×10⁻⁴, more preferably from 0.10×10⁻⁴ to 34×10⁻⁴, even more preferably from 0.10×10⁻⁴ to 30×10⁻⁴
<6> In any one of <1> to <5>, the food and beverage composition preferably contains a food ingredient, and more preferably contains one or more selected from the group consisting of fishes and shellfishes, meats, beans, dairy products, seaweeds, nuts and seeds, cereal grains, vegetables, fruits, tuberous and corm vegetables, mushrooms, eggs, saccharides, fats or oils, extracts, seasonings, proteins, bird's nest, shark's fin, and soft-shelled turtle.
<7> In any one of <1> to <6>, the solid content of the food and beverage composition is preferably 5.0 mass% or more, more preferably 10 mass% or more, even more preferably 15 mass% or more, is preferably 100 mass% or less, more preferably 99 mass% or less, even more preferably 98 mass% or less, and is preferably from 2.0 mass% to 100 mass%, more preferably from 5.0 mass% to 99 mass%, more preferably from 10 mass% to 99 mass%, even more preferably from 15 mass% to 98 mass%.

### Examples

### (1) Analysis of Chlorogenic Acids

HPLC was used as an analyzer. The model numbers of units for forming the apparatus are as described below.
- UV-VIS detector: SPD-20A (manufactured by Shimadzu Corporation)
- Column oven: CTO-20AC (manufactured by Shimadzu Corporation)
- Pump: LC-20AD (manufactured by Shimadzu Corporation)
- Autosampler: SIL-20AC (manufactured by Shimadzu Corporation)
- Column: Cadenza CD-C18, inner diameter of 4.6 mm×length of 150 mm, particle size of 3 µm (manufactured by Imtakt Corporation)

Analysis conditions are as described below.
- Sample injection volume: 10 µL
- Flow rate: 1.0 mL/min
- UV-VIS detector set wavelength: 325 nm
- Column oven set temperature: 35°C
- Eluent A: 50 mM acetic acid, 0.1 mM 1-hydroxyethane-1,1-diphosphonic acid, 10 mM sodium acetate, and 5 (v/v)% acetonitrile solution
- Eluent B: acetonitrile

### Concentration Gradient Conditions (vol%)

| Time | Eluent A | Eluent B |
|---|---|---|
| 0.0 min | 100% | 0% |
| 10.0 min | 100% | 0% |
| 15.0 min | 95% | 5% |
| 20.0 min | 95% | 5% |
| 22.0 min | 92% | 8% |
| 50.0 min | 92% | 8% |
| 52.0 min | 10% | 90% |
| 60.0 min | 10% | 90% |
| 60.1 min | 100% | 0% |
| 70.0 min | 100% | 0% |

| | |
|---|---|
| • 3-Caffeoylquinic acid: | 5.3 min |
| • 5-Caffeoylquinic acid: | 8.8 min |
| • 4-Caffeoylquinic acid: | 11.6 min |
| • 3-Feruloylquinic acid: | 13.0 min |
| • 5-Feruloylquinic acid: | 19.9 min |
| • 4-Feruloylquinic acid: | 21.0 min |
| • 3,4-Dicaffeoylquinic acid: | 36.6 min |
| • 3,5-Dicaffeoylquinic acid: | 37.4 min |
| • 4,5-Dicaffeoylquinic acid: | 44.2 min |

The content (mass%) of chlorogenic acids was determined from an area percentage determined here by using 5-caffeoylquinic acid (Tokyo Chemical Industry Co., Ltd.) as a standard substance.

### (2) Analysis of Dipeptide

0.10 g of each sample was weighed and placed into a centrifuge tube, 15 ml of a 70 vol% methanol aqueous solution was added thereto, and the mixture was extracted by shaking under application of an ultrasonic wave. The supernatant liquid of the extract solution was filtered through a 0.2 µm membrane filter, and further centrifuged with a centrifugal filtration unit (Nanosep 3K manufactured by Pall Corporation). The resultant filtrate was used as a measurement sample.

A LC/MS (Waters, Acquity UPLC/Xevo G2-XS QTOF) was used as an analyzer. Atlantis T3 of 3.0 mm in inner diameter and 150 mm in length, and 3 µm in particle size (manufactured by Waters Corporation) was used as a column.

Analysis conditions are as described below.
• Sample injection volume: 2 µL
• Flow rate: 0.5 mL/min
• Column temperature: 40°C
• Column flow rate: 0.5 mL/min
• Eluent A: 0.1% aqueous solution of formic acid
• Eluent B: acetonitrile
• Concentration gradient conditions (vol%)

| Time | Eluent A | Eluent B |
|---|---|---|
| 0.00 min | 100% | 0% |
| 15.00 min | 50% | 50% |
| 15.01 min | 0% | 100% |
| 20.00 min | 0% | 100% |

• Injection volume: 2 µL
• Detector: MS (ESI-Posi.)
• Detection m/z: 211.14 (cyclo(Leu-Pro)), 229 (Leu-Pro)
• Cone voltage: 40 V

### (3) Production of Coffee Bean Extract

400 g of coffee beans (from Vietnam) each having an L value of 50 were loaded into a drip extraction device. The lower portion of the drip extraction device was filled with 0.25 L of hot water near the bottom. After that, 1.02 L of hot water was supplied through a shower from the upper portion of the drip extraction device, and the state was kept for 10 minutes. After the state was kept, while hot water was supplied through a shower, the solution was discharged at a rate of 12.5 g/10 sec from the lower portion of the drip extraction device. The collection of the solution was stopped when the amount of the collected solution reached 2.4 L. The resultant collected solution was defined as an extract solution. The resultant extract solution was dried with a spray dryer to provide a powdered coffee bean extract. In the powdered coffee bean extract, the amount of chlorogenic acids was 36 mass% and the amount of cyclo(Leu-Pro) was 3 mass ppm.

### [Powdered Supplement]

### Examples 1 to 9, Comparative Examples 1 to 3, and Reference Example 1

Components shown in Table 1 were uniformly mixed to produce a powdered supplement. The respective supplements were subjected to analysis and sensory evaluation. The results are collectively shown in Table 1.

### [Sensory Evaluation]

Two expert panelists performed a sensory test for the "astringent taste derived from chlorogenic acids," and the "retronasal aroma" and "bitter aftertaste" of each of the foods and beverages obtained in Examples, Comparative Examples, and Reference Example at the time of the eating and drinking of the food and beverage. The sensory test was performed after each panelist agreed to use the following evaluation criteria as evaluation criteria for the "astringent taste derived from chlorogenic acids," and the "retronasal aroma" and "bitter aftertaste" of each of the foods and beverages. Subsequently, the average of scores given by the expert panelists was determined. The average of the scores is rounded to the first decimal place.

### Evaluation Criteria for Astringent Taste derived from Chlorogenic Acids

The astringent taste derived from chlorogenic acids was evaluated by defining the score of the astringent taste derived from chlorogenic acids of the food and beverage of Comparative Example 1 as "5" and defining the score of the astringent taste derived from chlorogenic acids of the food and beverage of Reference Example 1 as "1" from the following viewpoint: whether the astringent taste derived from chlorogenic acids was sensed at the time of the eating and drinking of each of the foods and beverages. Specific evaluation criteria are as described below. Score 5: The astringent taste derived from chlorogenic acids is extremely strongly sensed (corresponding to Comparative Example 1).

4: The astringent taste derived from chlorogenic acids is somewhat strongly sensed.

3: The astringent taste derived from chlorogenic acids is sensed, but the astringent taste is not noticeable.

2: The astringent taste derived from chlorogenic acids is slightly sensed.

1: The astringent taste derived from chlorogenic acids is hardly sensed (corresponding to Reference Example 1).

### Evaluation Criteria for Retronasal Aroma of each of Foods and Beverages

The retronasal aroma of each of the foods and beverages was evaluated by defining the score of the retronasal aroma of the food and beverage of Reference Example 1 as "5" from the following viewpoint: whether the aroma specific to each of the foods and beverages was sensed at the time of the eating and drinking of the food and beverage. Specific evaluation criteria are as described below.

### Score 5: Strongly sensed (corresponding to Reference Example 1)

**4:** Somewhat strongly sensed
**3:** Slightly strongly sensed
**2:** Slightly sensed
1: Hardly sensed

### Evaluation Criteria for Bitter Aftertaste

The bitter aftertaste was evaluated by defining the score of the bitter aftertaste of the food and beverage of Comparative Example 2 as "5" from the following viewpoint: whether bitterness different from the aroma specific to each of the foods and beverages was sensed at the time of the eating and drinking of the food and beverage. Specific evaluation criteria are as described below.
Score 5: Strongly sensed (corresponding to Comparative Example 2)
4: Somewhat strongly sensed
3: Slightly strongly sensed
2: Slightly sensed
1: Hardly sensed

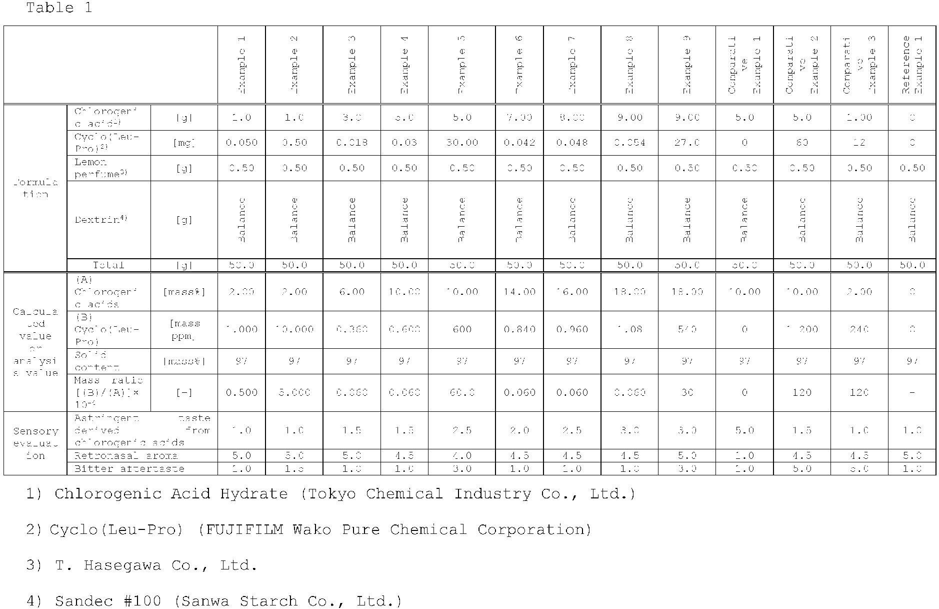

### [Tomato Juice Beverage]

### Examples 10 to 15, Comparative Examples 4 and 5, and Reference Example 2

Components shown in Table 2 were blended, baking soda was appropriately added to adjust the pH to from 5.5 to 6.0, and then the mixture was stirred to produce a tomato juice beverage. The respective beverages were subjected to analysis and sensory evaluation. The sensory evaluation was performed in the same manner as in Example 1 except that the evaluation was performed by defining the score of the astringent taste derived from chlorogenic acids of the beverage of Comparative Example 4 as "5" and defining the score of the retronasal aroma of the beverage of Reference Example 2 as "5".

The results are collectively shown in Table 2.

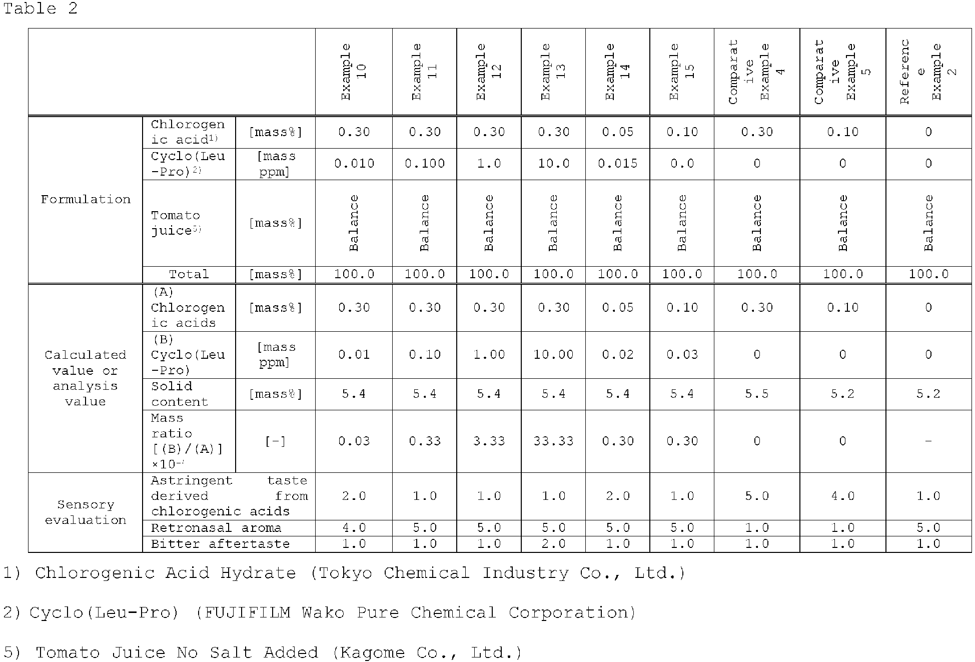

### [Corn Soup]

### Example 16, Comparative Example 6, and Reference Example 3

Components shown in Table 3 were blended, baking soda was appropriately added to adjust the pH to from 5.5 to 6.0, and then the mixture was stirred to produce a corn soup. The respective corn soups were subjected to analysis and sensory evaluation. The sensory evaluation was performed in the same manner as in Example 1 except that the evaluation was performed by defining the score of the astringent taste derived from chlorogenic acids of the corn soup of Comparative Example 6 as "5" and defining the score of the retronasal aroma of the corn soup of Reference Example 3 as "5".

The results are collectively shown in Table 3.

**Table 3**

| | | | Example 16 | Comparative Example 6 | Reference Example 3 |
|---|---|---|---|---|---|
| Formulation | Chlorogenic acid¹⁾ | [mass%] | 0.20 | 0.20 | 0 |
| | Cyclo (Leu-Pro)²⁾ | [mass ppm] | 0.100 | 0 | 0 |
| | Corn puree⁶⁾ | [mass%] | 56.5 | 56.5 | 56.5 |
| | Salt | [mass%] | 0.2 | 0.2 | 0.2 |
| | Water | [mass%] | Balance | Balance | Balance |
| | Total | [mass%] | 100.0 | 100.0 | 100.0 |
| Calculated value or analysis value | (A) Chlorogenic acids | [mass%] | 0.20 | 0.20 | 0 |
| | (B) Cyclo (Leu-Pro) | [mass ppm] | 0.10 | 0 | 0 |
| | Solid content | | 10.5 | 10.5 | 10.4 |
| | Mass ratio [(B)/(A)]×1 0⁻⁴ | [-] | 0.50 | 0 | - |
| Sensory evaluation | Astringent taste derived from chlorogenic acids | | 1.0 | 5.0 | 1.0 |
| | Retronasal aroma | | 5.0 | 1.0 | 5.0 |
| | Bitter aftertaste | | 1.0 | 1.0 | 1.0 |

| | | | | | |
|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) 6) Corn Puree (Kagome Co., Ltd.) | | | | | |

### [Amazake]

### Example 17, Comparative Example 7, and Reference Example 4

Components shown in Table 4 were blended, baking soda was appropriately added to adjust the pH to from 5.5 to 6.0, and then the mixture was stirred to produce an amazake. The respective amazakes were subjected to analysis and sensory evaluation. The sensory evaluation was performed in the same manner as in Example 1 except that the evaluation was performed by defining the score of the astringent taste derived from chlorogenic acids of the amazake of Comparative Example 7 as "5" and defining the score of the retronasal aroma of the amazake of Reference Example 4 as "5".

The results are collectively shown in Table 4.

**Table 4**

| | | | Example 17 | Comparative Example 7 | Reference Example 4 |
|---|---|---|---|---|---|
| Formulation | Chlorogenic acid¹⁾ | [mass%] | 0.30 | 0.30 | 0 |
| | Cyclo(Leu-Pro)²⁾ | [mass ppm] | 0.10 | 0 | 0 |
| | Amazake⁷⁾ | [mass%] | Balance | Balance | Balance |
| | Total | [mass%] | 100.0 | 100.0 | 100.0 |
| Calculated value or analysis value | (A) Chlorogenic acids | [mass%] | 0.30 | 0.30 | 0 |
| | (B) Cyclo (Leu-Pro) | [mass ppm] | 0.10 | 0 | 0 |
| | Solid content | [mass%] | 15 | 15 | 15 |
| | Mass ratio [(B)/(A)]×10⁻⁴ | [-] | 0.33 | 0 | - |
| Sensory evaluation | Astringent taste derived from chlorogenic acids | | 1.0 | 5.0 | 1.0 |
| | Retronasal aroma | | 5.0 | 1.0 | 5.0 |
| | Bitter aftertaste | | 1.0 | 1.0 | 1.0 |

| | | | | | |
|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) 7) Koji Amazake (Marukome Co., Ltd.) | | | | | |

### [Pullman Loaf]

### Example 18, Comparative Example 8, and Reference Example 5

Dough was prepared in accordance with raw material blending amounts shown in Table 5 to produce a pullman loaf. Specifically, 250 g of CAMELLIA (hard flour, manufactured by Nisshin Flour Milling INC.), 0 g to 1.5 g of chlorogenic acid, 0 mg to 1.0 mg of cyclo (Leu-Pro), 10 g of butter, 17 g of sugar (superfine sugar), 2.5 g of salt, 180 g of water, and 3 g of dry yeast (product name: SUPER CAMELLIA Dry Yeast, manufactured by Nisshin Foods Inc.) were weighed. A breadmaker SD-MDX102 (manufactured by Panasonic Corporation) was used. Blending was performed by an all-in-mix method through a baking program of Menu 1. The dough obtained by water absorption, mixing and kneading, and aging was fermented at 28°C for two and a half hours. After the fermentation, the dough was baked at 200°C for 30 minutes to provide a pullman loaf. The respective pullman loaves were subjected to analysis and sensory evaluation. The sensory evaluation was performed in the same manner as in Example 1 except that the evaluation was evaluated by defining the score of the astringent taste derived from chlorogenic acids of the pullman loaf of Comparative Example 8 as "5" and defining the score of the retronasal aroma of the pullman loaf of Reference Example 5 as "5".

The results are collectively shown in Table 5.

**Table 5**

| | | | Example 18 | Comparative Example 8 | Reference Example 5 |
|---|---|---|---|---|---|
| | Chlorogenic acid¹⁾ | [g] | 1.5 | 1.5 | 0 |
| | Cyclo (Leu-Pro) ²⁾ | [mg] | 1.0 | 0 | 0 |
| | Hard flour (CAMELLIA) | [g] | 250 | 250 | 250 |
| | Butter | [g] | 10 | 10 | 10 |
| Formulation | Sugar | [g] | 17 | 17 | 17 |
| | Salt | [g] | 2.5 | 3 | 3 |
| | Water | [g] | 180 | 180 | 180 |
| | Dry yeast | [g] | 3 | 3 | 3 |
| | Total (dough weight) | [g] | 465.0 | 464.0 | 462.5 |
| | Weight after baking | [g] | 384 | 384 | 385 |
| Calculated value or analysis value | (A) Chlorogenic acids | [mass% after baking] | 0.39 | 0.39 | 0 |
| | (B) Cyclo(Leu-Pro) | [mass ppm after baking] | 2.60 | 0 | 0 |
| | Solid content | [mass% after baking] | 68 | 68 | 68 |
| | Mass ratio [(B)/(A)]×10⁻⁴ | [-] | 6.7 | 0 | - |
| Sensory evaluation | Astringent taste derived from chlorogenic acids | | 1.0 | 5.0 | 1.0 |
| | Retronasal aroma | | 5.0 | 1.0 | 5.0 |
| | Bitter aftertaste | | 1.0 | 1.0 | 1.0 |

| | | | | | |
|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) | | | | | |

### [Cooked Rice]

### Example 19, Comparative Example 9, and Reference Example 6

150 g of rice (Milky Queen from Nagano prefecture, in 2021) was washed. After that, 285 g of water was added to 150 g of the washed rice, raw materials shown in Table 6 were added and dissolved, the mixture was slightly mixed, and then the rice was cooked with an electric rice cooker. The cooked rice was spread in a tray, separated with a rice scoop for about 1 minute, and allowed to stand still at room temperature for 30 minutes to be cooled. Thus, a cooked rice for evaluation was obtained. The respective cooked rices were subjected to analysis and sensory evaluation. The sensory evaluation was performed in the same manner as in Example 1 except that the evaluation was evaluated by defining the score of the astringent taste derived from chlorogenic acids of the cooked rice of Comparative Example 9 as "5" and defining the score of the retronasal aroma of the cooked rice of Reference Example 6 as "5".

The results are collectively shown in Table 6.

**Table 6**

| | | | Example 19 | Comparative Example 9 | Reference Example 6 |
|---|---|---|---|---|---|
| Formulation | Chlorogenic acid¹⁾ | [g] | 0.65 | 0.65 | 0 |
| | Cyclo(Leu-Pro)²⁾ | [mg] | 0.500 | 0.000 | 0 |
| | Rice⁸⁾ | [g] | 150 | 150 | 150 |
| | Water | [g] | 285 | 285 | 285 |
| | Total | [g] | 436.2 | 435.7 | 435.0 |
| | Weight after rice cooking | | 300 | 300.0 | 300.0 |
| Calculated value or analysis value | (A) Chlorogenic acids | [mass%] | 0.22 | 0.22 | 0 |
| | (B) Cyclo (Leu-Pro) | [mass ppm] | 1.67 | 0 | 0 |
| | Solid content | [mass%] | 40 | 40 | 40 |
| | Mass ratio [(B)/(A)]×10^{- 4} | [-] | 7.7 | 0 | - |
| Sensory evaluation | Astringent taste derived from chlorogenic acids | | 1.0 | 5.0 | 1.0 |
| | Retronasal aroma | | 5.0 | 1.0 | 5.0 |
| | Bitter aftertaste | | 1.0 | 1.0 | 1.0 |

| | | | | | |
|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) 8) Milky Queen | | | | | |

### [Candy]

### Examples 20 and 21, Comparative Example 10, and Reference Example 7

Raw materials shown in Table 7 were melted by heating at 70°C to prepare a liquid candy material. The resultant liquid candy material was continuously heated at 70°C and boiled down until the water content was almost completely evaporated. The resultant liquid candy material was molded, and cooled at room temperature to provide a candy. The respective candies were subjected to analysis and sensory evaluation. The sensory evaluation was performed in the same manner as in Example 1 except that the evaluation was evaluated by defining the score of the astringent taste derived from chlorogenic acids of the candy of Comparative Example 10 as "5" and defining the score of the retronasal aroma of the candy of Reference Example 7 as "5".

The results are collectively shown in Table 7.

**Table 7**

| | | | Example 20 | Example 21 | Comparative Example 10 | Reference Example 7 |
|---|---|---|---|---|---|---|
| Formula tion | Chlorog enic acid¹⁾ | [g] | 4.10 | 4.10 | 4.10 | 0 |
| | Cyclo (L eu-Pro)²⁾ | [mg] | 0.200 | 20.000 | 0 | 0 |
| | Millet jelly | [g] | 48 | 48 | 48 | 48 |
| | Granula ted sugar | [g] | 26 | 26 | 26 | 26 |
| | Trisodi um citrate | [g] | 1.4 | 1.4 | 1.4 | 1.4 |
| | Water | [g] | 20.0 | 20.0 | 20.0 | 20.0 |
| | Citrus perfume | [g] | 1 | 1 | 1 | 1 |
| | Total | [g] | 100.00020 | 100.0200 | 100.00 | 95.90 |
| Calcula ted value or analysi s value | (A) Chlorog enic acids | [mass%] | 4.10 | 4.10 | 4.10 | 0 |
| | (B) Cyclo (L eu-Pro) | [mass ppm] | 2.00 | 200 | 0 | 0 |
| | Solid content | [mass%] | 99.0 | 99.0 | 99.0 | 99.0 |
| | Mass ratio [(B)/(A )]×10⁻⁴ | [-] | 0.488 | 48.78 | 0 | - |
| Sensory evaluat ion | Astringent taste derived from chlorogenic acids | | 1.0 | 2.5 | 5.0 | 1.0 |
| | Retronasal aroma | | 5.0 | 5.0 | 1.0 | 5.0 |
| | Bitter aftertaste | | 1.0 | 2.0 | 1.0 | 1.0 |

| | | | | | | |
|---|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) | | | | | | |

### [Ice Cream]

### Examples 22 and 23, Comparative Example 11, and Reference Example 8

Superfine sugar and fresh cream were weighed in accordance with blending composition shown in Table 8, placed into a Hobart mixer N50 MIXER manufactured by Hobart Corporation, mixed at a medium rate for 1 minute, and then dispersed with a spatula. Subsequently, milk, a vanilla extract, and chlorogenic acid were weighed in accordance with the blending composition shown in Table 8, placed into the mixer, added, mixed at a medium rate for 1 minute, dispersed with a spatula, and then mixed at a medium rate for 1 minute again to provide an ice cream mix. The ice cream mix obtained by the mixing was transferred to a cooling pot of KAI ice cream maker (product number: DL-5929 manufactured by Kai Corporation) that had been cooled at -18°C in advance, and stirred at an initial rotation speed of 34 rpm/min. The ice cream maker was stopped in 15 minutes to 35 minutes based on the observation of an overrunning state. Thus, an ice cream was obtained. The respective ice creams were subjected to analysis and sensory evaluation. The sensory evaluation was performed in the same manner as in Example 1 except that the evaluation was evaluated by defining the score of the astringent taste derived from chlorogenic acids of the ice cream of Comparative Example 11 as "5" and defining the score of the retronasal aroma of the ice cream of Reference Example 8 as "5".

The results are collectively shown in Table 8.

**Table 8**

| | | | Example 22 | Example 23 | Comparative Example 11 | Reference Example 8 |
|---|---|---|---|---|---|---|
| Formula tion | Chlorog enic acid¹⁾ | [g] | 1.00 | 1.00 | 1.00 | 0 |
| | Cyclo (L eu-Pro)²⁾ | [mg] | 0.050 | 4.0 | 0 | 0 |
| | Milk⁹⁾ | [g] | 80 | 80 | 80 | 80 |
| | Fresh cream¹⁰⁾ | [g] | 100 | 100 | 100 | 100 |
| | Superfi ne sugar | [g] | 10 | 10 | 10 | 10 |
| | Vanilla extract | [g] | 1.0 | 1.0 | 1.0 | 1.0 |
| | Total | [g] | 192.00005 | 192.004 | 192.0 | 191 |
| | (A) Chlorog enic acids | [mass%] | 0.521 | 0.521 | 0.521 | 0 |
| | (B) Cyclo (L eu-Pro) | [mass ppm] | 0.26 | 20.83 | 0 | 0 |
| | Solid content | [mass%] | 30.9 | 30.9 | 30.9 | 30.6 |
| | Mass ratio [(B)/(A )]×10⁻⁴ | [-] | 0.50 | 40.00 | 0 | - |
| Sensory evaluat ion | Astringent taste derived from chlorogenic acids | | 1.0 | 2.0 | 5.0 | 1.0 |
| | Retronasal aroma | | 5.0 | 4.5 | 1.0 | 5.0 |
| | Bitter aftertaste | | 1.0 | 1.5 | 1.0 | 1.0 |

| | | | | | | |
|---|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) 9) Oishii Gyunyu (Meiji Co., Ltd) 10) Takanashi Fresh Cream 35 | | | | | | |

### [Powdered Supplement]

### Examples 24 and 25

Components shown in Table 9 were uniformly mixed to produce a powdered supplement. The respective supplements were subjected to analysis and sensory evaluation. The sensory evaluation was performed in the same manner as in Example 1.

The results are collectively shown in Table 9.

**Table 9**

| | | | Example 24 | Example 25 |
|---|---|---|---|---|
| Formulation | Chlorogenic acid¹⁾ | [g] | 1.0 | 1.0 |
| | Leu-Pro¹¹⁾ | [mg] | 0.050 | 2.00 |
| | Lemon perfume³⁾ | [g] | 0.50 | 0.50 |
| | Dextrin⁴⁾ | [g] | Balance | Balance |
| | Total | [g] | 50.0 | 50.0 |
| Calculated value or analysis value | (A) Chlorogenic acids | [mass%] | 2.00 | 2.00 |
| | (B) Cyclo (Leu-Pro) | [mass ppm] | 1.000 | 40.000 |
| | Solid content | [mass%] | 97 | 97 |
| | Mass ratio [(B)/(A)]×10⁻⁴ | [-] | 0.500 | 20.000 |
| Sensory evaluation | Astringent taste derived from chlorogenic acids | | 1.0 | 1.0 |
| | Retronasal aroma | | 5.0 | 5.0 |
| | Bitter aftertaste | | 1.5 | 2.0 |

| | | | | |
|---|---|---|---|---|
| 1) Chlorogenic Acid Hydrate (Tokyo Chemical Industry Co., Ltd.) 3) T. Hasegawa Co., Ltd. 4) Sandec #100 (Sanwa Starch Co., Ltd.) 11) Leu-Pro (Sigma-Aldrich Co. LLC) | | | | |

### Examples 26 and 27

0.5 g of lemon perfume, the coffee bean extract, chlorogenic acid (Chlorogenic Acid Hydrate, Tokyo Chemical Industry Co., Ltd.), cyclo(Leu-Pro) (FUJIFILM Wako Pure Chemical Corporation), and dextrin were uniformly mixed to produce 100 g of a powdery supplement having composition shown in Table 10. Sensory evaluation was performed in the same manner as in Example 1.

The results of analysis and sensory evaluation are collectively shown in Table 10.

**Table 10**

| | | | Example 26 | Example 27 |
|---|---|---|---|---|
| Calculated value or analysis value | (A) Chlorogenic acids | [mass%] | 9.00 | 9.00 |
| | (B) Cyclo (Leu-Pro) | [mass ppm] | 1.250 | 20.75 |
| | Solid content | [mass%] | 97 | 97 |
| | Mass ratio [(B)/(A)]×10⁻⁴ | [-] | 0.139 | 2.31 |
| Sensory evaluation | Astringent taste derived from chlorogenic acids | | 1.5 | 1.0 |
| | Retronasal aroma | | 4.5 | 5.0 |
| | Bitter aftertaste | | 1.0 | 1.0 |

### [Tomato Juice Beverage]

### Examples 28 and 29

The coffee bean extract, chlorogenic acid (Chlorogenic Acid Hydrate, Tokyo Chemical Industry Co., Ltd.), and cyclo(Leu-Pro) (FUJIFILM Wako Pure Chemical Corporation) were added to tomato juice (no salt added, Kagome Co., Ltd.), baking soda was further added as appropriate to adjust the pH to from 5.5 to 6.0, and then 100 g of a tomato juice beverage having composition shown in Table 11 was produced. Sensory evaluation was performed in the same manner as in Example 10.

The results are collectively shown in Table 11.

**Table 11**

| | | | Example 28 | Example 29 |
|---|---|---|---|---|
| Calculated value or analysis value | (A) Chlorogenic acids | [mass%] | 0.06 | 0.31 |
| | (B) Cyclo (Leu-Pro) | [mass ppm] | 0.02 | 0.31 |
| | Solid content | [mass%] | 5.4 | 5.4 |
| | Mass ratio [(B)/(A)]×10⁻⁴ | [-] | 0.28 | 1.00 |
| Sensory evaluation | Astringent taste derived from chlorogenic acids | | 2.0 | 1.5 |
| | Retronasal aroma | | 4.0 | 5.0 |
| | Bitter aftertaste | | 1.0 | 1.0 |

### [Bird's Nest soaked in Syrup]

### Examples 30 to 32, Comparative Example 12, and Reference Example 9

Components shown in Table 12 were blended, baking soda was appropriately added to adjust the pH to from 6.5 to 8.0, and then the mixture was stirred to produce a bird's nest stewed in syrup. The respective nests stewed in syrup were subjected to analysis and sensory evaluation. The sensory evaluation was performed in the same manner as in Example 1 except that the evaluation was evaluated by defining the score of the astringent taste derived from chlorogenic acids of the nest stewed in syrup of Comparative Example 12 as "5" and defining the score of the retronasal aroma of the nest stewed in syrup of Reference Example 9 as "5".

The results are collectively shown in Table 12.

**Table 12**

| | | | Example 30 | Example 31 | Example 32 | Comparative Example 12 | Reference Example 9 |
|---|---|---|---|---|---|---|---|
| Formulati on | Chlorogenic acid¹⁾ | [g] | 0.3 | 0.3 | 0.3 | 0.3 | 0.0 |
| | Cyclo (Leu-Pro)²⁾ | [mg] | 0.005 | 0.05 | 0.50 | 0.00 | 0.00 |
| | Bird's nest stewed in syrup¹²⁾ | [g] | Balance | Balance | Balance | Balance | Balance |
| | Total | [g] | 100.0 | 100.0 | 100.0 | 100.0 | 100.0 |
| Calculate d value or analysis value | (A) Chlorogenic acids | [mass%] | 0.30 | 0.30 | 0.30 | 0.30 | 0 |
| | (B) Cyclo (Leu-Pro) | [mass ppm] | 0.050 | 0.500 | 5.000 | 0.000 | 0 |
| | Solid content | [mass%] | 10 | 10 | 10 | 10 | 10 |
| | Mass ratio [(B)/(A)]×10⁻⁴ | [-] | 0.167 | 1.67 | 16.7 | 0 | - |
| Sensory evaluatio n | Astringent taste derived from chlorogenic acids | | 2.0 | 1.0 | 1.0 | 5.0 | 1.0 |
| | Retronasal aroma | | 5.0 | 5.0 | 5.0 | 1.0 | 5.0 |
| | Bitter aftertaste | | 1.0 | 1.0 | 2.0 | 1.0 | 1.0 |

| | | | | | | | |
|---|---|---|---|---|---|---|---|
| 1) Chlorogenic Acid Hydrate (Tokyo Chemical Industry Co., Ltd.) 2) Cyclo(Leu-Pro) (FUJIFILM Wako Pure Chemical Corporation) 12) Bird's Nest stewed with Rock Sugar (Riken) | | | | | | | |

From Table 1 to Table 12, it is found that when a predetermined dipeptide is incorporated at a specific mass ratio with respect to chlorogenic acids, there is obtained a food and beverage composition that, despite comprising chlorogenic acids, has a suppressed astringent taste derived from chlorogenic acids, and allows the original retronasal aroma of a food and beverage to be sensed.

### [Production Example 1 Chocolate]

40 g of Superieure (cacao content: 38%, available from Daito Cacao Co., Ltd.), 0.2 g of chlorogenic acid (Chlorogenic Acid Hydrate, manufactured by Tokyo Chemical Industry Co., Ltd.), and 0.004 mg of cyclo(Leu-Pro) (manufactured by FUJIFILM Wako Pure Chemical Corporation) were added and sufficiently mixed to produce a chocolate mixture. The mixture was warmed to 70°C in a hot water bath, gently mixed and melted, and cooled to 32°C, and then 0.17 g of Chocolate Seed A (product name, manufactured by Fuji Oil Co., Ltd.) was readily added and uniformly dispersed to be dissolved. After that, the mixture was poured into a mold in a state of 30°C and stored in a constant temperature bath set to 15°C all day and night. The mixture was taken out from the mold to provide a chocolate.

### [Production Example 2 Cocoa Beverage]

3.5 g of cocoa powder (manufactured by Van Houten), 6 g of superfine sugar, 0.3 g of chlorogenic acid (Chlorogenic Acid Hydrate, manufactured by Tokyo Chemical Industry Co., Ltd.), and 0.05 mg of cyclo(Leu-Pro) (manufactured by FUJIFILM Wako Pure Chemical Corporation) were sufficiently mixed, a small amount of water was added, and the mixture was sufficiently kneaded to be dissolved. After that, 50 g of milk was added, and water was further added until the amount reached 100 g. The contents were sufficiently mixed and dispersed to provide a cocoa beverage.

## Claims

1. A food and beverage composition, comprising the following components (A) and (B):
(A) 0.050 mass% to 20 mass% of chlorogenic acids; and
(B) one or more selected from the group consisting of Leu-Pro and cyclo(Leu-Pro),
wherein a mass ratio of the component (B) to the component (A), [(B)/(A)], is 0.030×10⁻⁴ or more and 100×10⁻⁴ or less, and the food and beverage composition has a solid content of 2.0 mass% or more.

2. The food and beverage composition according to claim 1, wherein a content of the component (B) is from 0.010×10⁻⁴ mass% to 600×10⁻⁴ mass%.

3. The food and beverage composition according to claim 1 or 2, further comprising a food ingredient.

4. The food and beverage composition according to claim 3, wherein the food ingredient is one or more selected from the group consisting of fishes and shellfishes, meats, beans, dairy products, seaweeds, nuts and seeds, cereal grains, vegetables, fruits, tuberous and corm vegetables, mushrooms, eggs, saccharides, fats or oils, extracts, seasonings, proteins, bird's nest, shark's fin, and soft-shelled turtle.

5. A method of improving a taste and flavor of a food and beverage composition having a solid content of 2.0 mass% or more, the method comprising allowing (A) 0.050 mass% to 20 mass% of chlorogenic acids, and (B) one or more selected from the group consisting of Leu-Pro and cyclo(Leu-Pro) to coexist at such a ratio that a mass ratio of the component (B) to the component (A), [(B)/(A)], is 0.030×10⁻⁴ or more and 100×10⁻⁴ or less.
